# EUROPEAN PATENT SPECIFICATION

(11) **EP 0 535 113 B1**
(45) Date of publication and mention of the grant of the patent: **27.09.1995**
(21) Application number: 91911994.1
(22) Date of filing: 20.06.1991
(51) Int. Cl.: C01B 11/02

(54) **METHANOL-BASED CHLORINE DIOXIDE PROCESS**
CHLORDIOXID-HERSTELLUNGSVERFAHREN WOBEI METHANOL ANGEWENDET WIRD
PROCEDE DE PRODUCTION DE DIOXYDE DE CHLORE A BASE DE METHANOL

(30) Priority: 20.06.1990 CA 201938
(43) Date of publication of application: 07.04.1993
(73) Proprietor: Sterling Canada, Inc., Houston, Texas 77002-4312 (US)
(72) Inventor: FREDETTE, Maurice, C., J., Mississauga L4W 3V6, ON (CA); BIGAUSKAS, Tomas, Daniel, Mississauga L5N 2T4, ON (CA); BECHBERGER, Edward, J., Etobicoke M9C 3L3, ON (CA)
(74) Representative: Larsson, Kjell
(86) International application number: CA9100228
(87) International publication number: WO9119668

(56) References cited:
- EP-A- 445 493
- EP-A- 0 284 577
- EP-A- 0 357 198
- EP-A- 0 365 501
- US-A- 4 081 520

## Description

### FIELD OF INVENTION

The present invention is concerned with the production of chlorine dioxide, in particular to the production of chlorine dioxide using methanol.

### BACKGROUND TO THE INVENTION

It is known to produce chlorine dioxide by reduction of an acid aqueous sodium chlorate solution using methanol, as described in U.S. Patent No. 2,881,052. The process, however, is quite slow, involves the handling of a large volume of liquid effluent and the efficiency of the process is quite low. More recently there issued U.S. Patent No. 4,081,520, assigned to the assignee hereof, wherein the problems of the prior process were overcome by the use of a single vessel generator-evaporator-crystallizer. The latter process operates at high efficiency, produces no liquid effluent and has an acceptable production rate.

In the commercial implementation of the above-noted process, known commercially as the "R8" process, a periodic random complete loss of chlorine dioxide production has been observed from time to time, known as "white-outs". This problem was overcome, in accordance with U.S. Patent No. 4,465,658, assigned to the applicant hereof, by the continuous addition of chloride ions to the reaction medium. By purposely adding them to the reaction medium, the presence of chloride ions at all times is ensured and the possibility of white-outs is avoided.

The introduction of chloride ions in this way causes the formation of small amounts of chlorine along with the chlorine dioxide and that chlorine becomes dissolved in the chlorine dioxide solution. The presence of such chlorine dissolved in the chlorine dioxide is undesirable to some pulp mills.

The prior art has described procedures for forming chlorine dioxide from sodium chlorate, sulfuric acid and methanol. None of this prior art addresses the problem of eliminating the chloride feed at acid normalities below 7 while maintaining high efficiency of chlorine dioxide production.

EP 357,198 describes a procedure in which chlorine dioxide is generated from sodium chlorate, methanol and sulfuric acid at high acidity in a reactor separate from a crystallizer/evaporator. This procedure permits chlorine dioxide generation also to be effected by reaction of sodium chlorate, sodium chloride and sulfuric acid and production of neutral sodium sulfate in the crystallizer.

EP 365,501 describes a procedure in which chlorine dioxide is produced from sodium chlorate, methanol and sulfuric acid at a low acidity of 2 to 4.8 N, using certain catalytic agents to speed up the rate of reaction.

EP 284,577 describes a procedure in which chlorine dioxide is produced from sodium chlorate, methanol and sulfuric acid at a low acidity of 2 to 11 N, wherein the methanol is introduced to the crystallization zone of a cyclic reactor in order to minimize loss of methanol from the reactor in the chlorine dioxide product.

EP 445,493 is prior art under Article 54(3) EPC and is not relevant as regards inventive step. EP 445,493 describes a methanol-based chlorine dioxide generating process carried out at a chlorate concentration of at least 1.6 molar and over an acid normality range of 2.4 to 9 normal in which the addition of chloride ions beyond that producing 2 wt% chlorine in the chlorine dioxide product is avoided. The present invention is concerned with the provision of a methanol-based chlorine dioxide generating process effected at an acid normality of 5 to 7 normal, which permits chloride addition to prevent white-outs to be avoided, while maintaining the chlorate ion concentration in the reaction medium below that which produces a white out.

### SUMMARY OF INVENTION

It has been surprisingly been found that it is possible to eliminate the need for a continuous feed of chloride ions to the reaction medium, so that chlorine resulting therefrom is eliminated from the aqueous chlorine dioxide solution, and yet there is provided a chlorine dioxide generating process which has a continued high yield of chlorine dioxide without being susceptible to white-outs.

The reactions involved in the production of chlorine dioxide in a methanol-based chlorine dioxide generating process can be represented, as follows:

HClO₃ + HCl → HClO₂ + HClO (1)

HClO₃ + HClO₂ → 2ClO₂ + H₂O (2)

HClO + CH₃OH → HCl + HCHO + H₂O (3)

As may be seen, reaction (1) consumes chloride ion while reaction (3) replenishes it, so that the white-outs can be controlled by controlling the speed of reaction (1) relative to reaction (3).

In addition, if HClO is produced by reaction (1) much faster than it is consumed by reaction (3), then the HClO can be lost by the competing reaction:

HClO + HCl → Cl₂ + H₂O (4)

The present invention provides a novel methanol-based chlorine dioxide generating process which is able to satisfactorily operate at high efficiency without white-outs occurring by utilizing a lower total acid normality for the reaction medium below about 7 and a chlorate ion concentration generally greater than about 2 molar.

### BRIEF DESCRIPTION OF DRAWINGS

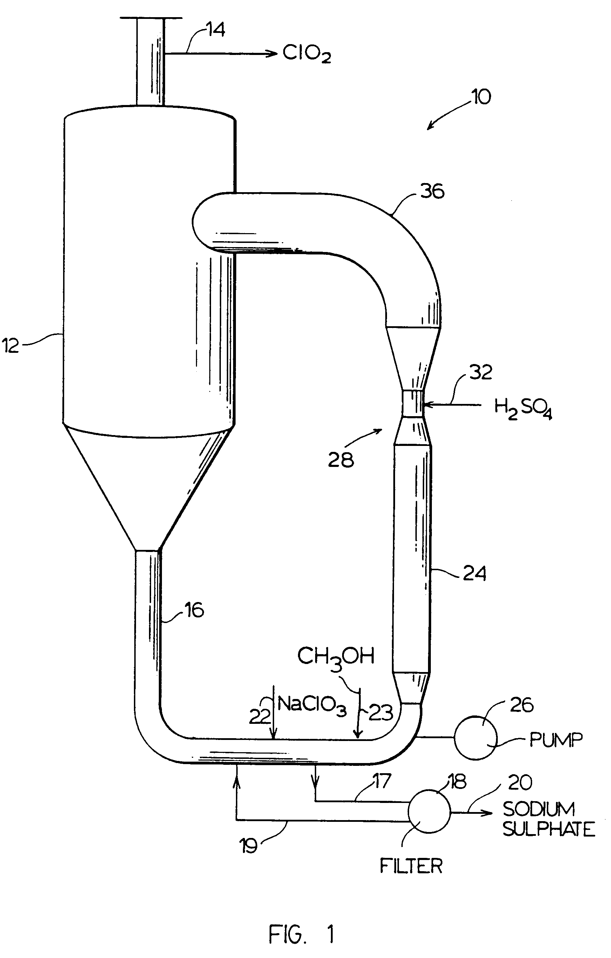

Figure 1 is a schematic flow sheet of a chlorine dioxide generating process provided in accordance with one embodiment of the invention;
Figure 2 is a graphical representation of laboratory data obtained under varying conditions to produce chlorine dioxide; and
Figure 3 is a graphical representation of pulp mill data obtained under varying conditions to produce chlorine dioxide.

### GENERAL DESCRIPTION OF INVENTION

As discussed above, the mechanism whereby chlorine dioxide is produced in a methanol-based chlorine dioxide generating process involves three inter-related chemical reactions as well as a fourth competing reaction. The effects of variations of the operating parameters of the process, including reactant concentrations, on the different chemical reactions is unknown and somewhat unpredictable.

As noted above, control of white-outs is achieved by controlling the speed of reactions (1) and (3). So long as reaction (1), which consumes chloride ions, does not exceed reaction (3), which produces chloride ion, then a white-out condition cannot occur. It would appear obvious that lower acidity as well as lower chlorate would slow down reaction (1).

However, using lower or the same chlorate concentration tends to decrease the efficiency as the acidity is decreased. We have discovered that, using lower acidity and higher chlorate still slows down reaction (1) sufficiently that a white-out condition is not experienced in the absence of added chloride and, at the same time, high efficiencies of chlorine dioxide production are maintained. Nevertheless, there is an upper level of chlorate concentration at which a white-out condition can still be achieved and hence preferably is avoided.

Accordingly, in the process of the present invention, aqueous chlorate solution is reduced with methanol in the presence of sulfuric acid at total acid normality below about 7 normal and at a chlorate ion concentration above about 2.0 to obtain chlorine dioxide at an efficiency greater than about 90%. In contrast, such efficiencies are obtained in the R8 process at total acid normality greater than 9 normal and a chlorate ion concentrate of about 1 molar.

The aqueous reaction medium is maintained at its boiling point while an appropriate subatmospheric pressure is applied to the reaction zone. The reaction medium usually is maintained at a reaction temperature of at least about 60°C, preferably about 65° to about 80°C. The pressure applied to the reaction zone generally ranges from about 100 to about 300 mm Hg, preferably about 120 to about 200 mm Hg, the actual pressure depending on the reaction temperature.

It may be desirable to provide an air purge to the reaction zone to maintain a low partial pressure of chlorine dioxide in the product gas stream, preferably below about 90 mm Hg.

The aqueous acid reaction medium in the present invention has a total acid normality below about 7 normal, preferably down to about 5 normal, and a chlorate concentration of at least about 2.0 molar, preferably about 3.0 to about 4.0 molar. The chlorate concentration and total acid normality are inter-related to maintain an efficiency of chlorine dioxide production (i.e. the percentage of 1 mole of chlorate which is converted to chlorine dioxide) of at least about 90%, preferably at least about 95%. For example, at a total acid normality of just below about 7 normal, a chlorate ion concentration of about 2.5 molar is required to maintain an efficiency greater than 95%, while the same efficiency is maintained at a total acid normality of about 6 normal and a chlorate ion concentration of about 3.5 molar.

The chlorate ion concentration should not be sufficiently high that a white-out condition is induced by depletion of chloride ions from the reaction medium by operation of reaction (1). The actual upper limit of chlorate ion concentration depends on the other operating parameters and is readily determined. Generally, the chlorate ion concentration does not exceed about 6.0 molar.

The chlorate employed in the process of the present invention usually is sodium chlorate, but other alkali metal chlorates may be used. The presence of the sodium ions combined with the presence of sulfuric acid results in the formation of by-product sodium sulfate, which builds up in concentration after start up, until it saturates the reaction medium and crystallizes in the generator. The form of the sodium sulfate precipitated depends on the total acid normality of the reaction medium, but generally comprises sodium sesquisulfate i.e. Na₃H(SO₄)₂ (or NaHSO₄.Na₂SO₄).

By operating under the lower acidity and higher chlorate concentration conditions outlined herein, not only is the necessity for a continuous chloride feed eliminated, so that chlorine arising from this source is eliminated from product chlorine dioxide solution, but the chemical efficiency of chlorine dioxide production is maintained at a high level. In addition, chlorine dioxide production at commercially-acceptable rates is maintained.

Methanol is fed to the reaction medium as the reducing agent for the chlorate and produces chlorine dioxide in accordance with reaction (2). The location of introduction of methanol to the reactor is not critical to the process. When operating under the conditions of the invention, most conveniently the methanol may be introduced to the recycle loop, i.e. following the sodium sesquisulfate crystallization zone in the chlorine dioxide generating reaction zone and prior to the reboiler.

Methanol consumption generally does not exceed about 0.2 tons per ton of chlorine dioxide produced, and is preferably in the range of about 0.13 to about 0.16 tons per ton of chlorine dioxide produced.

### DESCRIPTION OF PREFERRED EMBODIMENT

Referring to the drawings, a chlorine dioxide generator unit 10 has an evaporator-crystallizer vessel 12 which has an upper outlet 14 for recovery of product chlorine dioxide from the unit 10. The chlorine dioxide product is removed as a gaseous admixture with steam produced by evaporation of the reaction medium in the vessel 12 and may contain some chlorine, depending on the efficiency of chlorine dioxide production. The vessel 12 is subjected to subatmospheric pressure to maintain the reaction medium therein at the boiling point. The subatmospheric pressure applied to the reaction zone generally ranges from about 100 to about 300 mm Hg, preferably about 120 to about 200 mm Hg. The product gas stream in line 14 is processed to form an aqueous solution of chlorine dioxide for subsequent use, such as in pulp mill bleaching.

A slurry of crystallized by-product sodium sulphate in spent reaction medium is removed from the vessel by pipe 16, is passed by line 17 to a filter 18 for removal of the solid phase and the mother liquor is returned by line 19 to the recycle pipe 16. The by-product solid phase sodium sulphate recovered in line 20 usually takes the form of sodium sesquisulphate.

Sodium chlorate is fed to the recycle pipe 16 by line 22 to make up for sodium chlorate consumed in the process. Sodium chlorate is fed as an aqueous solution thereof to said recycle pipe 16, generally having a concentration of about 3 to about 7.5 molar, preferably about 5 to about 6.5 molar.

Feed of the make-up sodium chlorate solution produces a recycle solution generally having a concentration of sodium chlorate of at least about 2 molar preferably about 2.5 to about 4.0 molar. The concentration of sodium chlorate in the reaction medium is co-ordinated with the total acid normality of the reaction medium, so as to obtain an efficiency of chlorine dioxide production of at least about 90%, preferably at least about 95%.

Methanol is fed to the recycle stream by line 23 in the vicinity of the base of the recycle loop in an amount sufficient to effect generation of chlorine dioxide from the reactants.

The recycle mixture then is pumped through a reboiler 24 by pump 26 to a venturi 28. The recycle mixture is heated by the reboiler 24 to the reaction temperature generally in the range of about 60° to about 90°C, preferably about 65° to about 80°C.

The upstream side of the venturi 28 converges towards the throat 30 and exerts a back pressure on the recycle stream which prevents the mixture from boiling in the reboiler 24.

At the throat 30, sulphuric acid is fed by line 32 into the recycle stream. As a result of the feed of the sulfuric acid, chlorine dioxide is generated and passes along with spent reaction medium through pipe 36 back to the vessel 12.

The sulphuric acid generally is fed by line 32 as concentrated acid to the venturi throat 30, preferably of concentration from about 30 to about 36 normal. Sulphuric acid is fed to the venturi throat 30 at a flow rate sufficient to establish the desired total acid normality of reaction medium in the generator 12, generally about 5 to about 7 normal.

In contrast to the procedure described in U.S. Patent No. 4,465,658, there is no deliberate feed of chloride ions to the reaction medium in the generator 12 and no white-out condition is experienced provided that the chlorate ion concentration is maintained below certain concentrations, generally below about 6 molar.

### EXAMPLES

### Example 1

A nominal 10 L volume C1O₂ generation was operated at 125 mm Hg absolute at an average of 7.48 N acidity and 2.06 M NaC1O₃ with a boiling temperature of 66°C. Feeds of H₂SO₄, NaClO₃, and CH₃OH were metered in to produce about 15g per minute of ClO₂. A total of 24.3 moles ClO₂ were made from 25.4 moles of NaClO₃ consumed for an apparent yield of 95.6%.

The total Cl atoms fed in vs found as ClO₂ or Cl₂ gave 103.1%. The corrected yield is 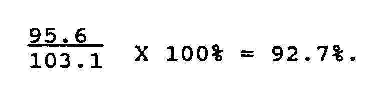
This compares well to the ratio of ClO₂ to Cl₂ produced which indicates 93.7% reaction efficiency.

The above conditions employed in this Example which are not within the scope of this invention, can produce >90% yield but not the preferred 95+% yield.

### Example 2

A similar run was performed at 125 mm Hg and 66°C boiling point but at an average of 6.47 N acidity and 2.62 M NaClO₃. The yield was 95.2% based on 23.8 moles of ClO₂ made. Thus, the conditions employed in this example, which are within the scope of this invention, can produce >95% yield.

### Example 3

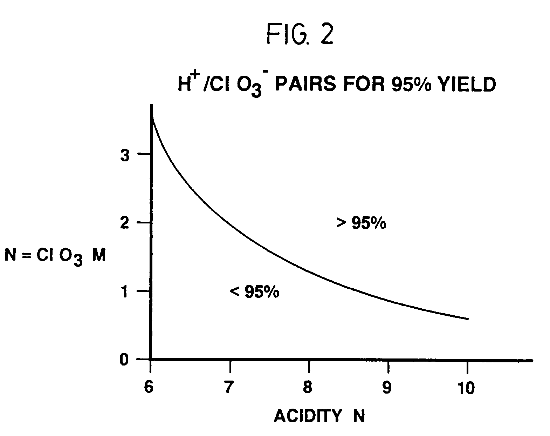

The data from many runs in the same equipment as used in Examples 1 and 2 and generally at approximately 125 mm Hg and approximately 67°C were plotted to give the pairs of H⁺/ClO₃⁻ required for >95% yield, as seen in Figure 2.

### Example 4

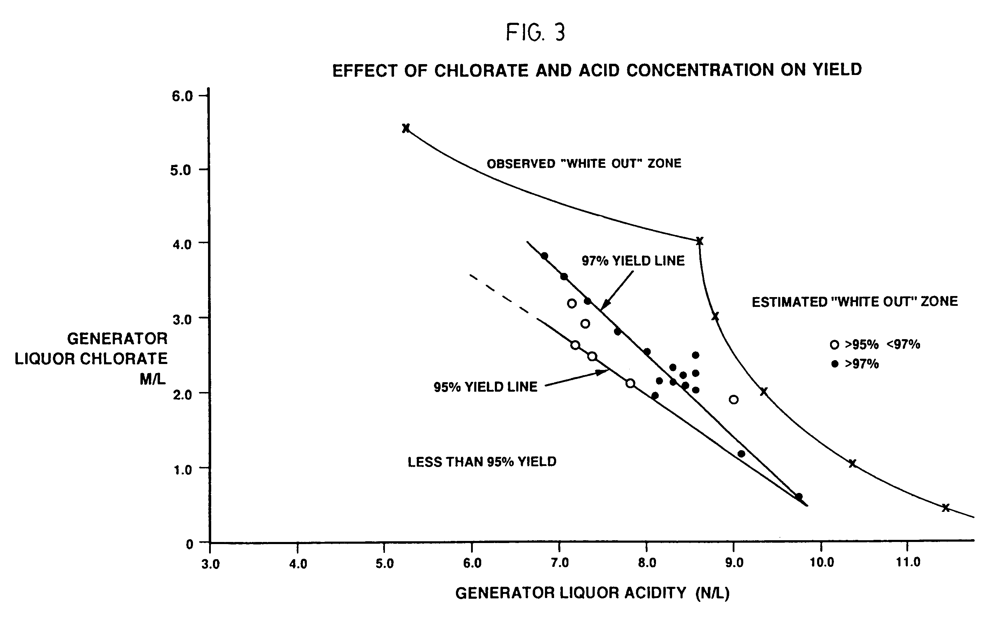

A commercial plant of 30 TPD capacity was operated at 25 TPD while varying the acidity from 9 down to 6 normal and while varying the chlorate concentration from 1 up to 4 M. The data was plotted in a similar manner to Example 3 above with additional data plotted on an estimated and observed white-out range. The pressure was kept at 120 mm Hg with the reaction medium boiling at about 70°C. The methanol was fed to the venturi at the exit of the reboiler. The data is presented in Figure 3.

The above Examples show how acidities at or below 7 N can still give acceptable yields by using chlorate concentrations that are at least 2 M and preferably at least 2.5 M. White-outs can be avoided by using chlorate concentrations that are below 6 M, preferably below 4 M.

### SUMMARY OF DISCLOSURE

In summary of this disclosure, the present invention provides a novel chlorine dioxide generating process based on methanol which eliminates the necessity for a chloride feed to avoid white-outs by using a total acid normality below 7 normal combined with a chlorate concentration of at least about 2.0 molar at efficiency levels greater than about 90%. Modifications are possible within the scope of this invention.

## Claims

1. A process for the production of chlorine dioxide, characterized by the combination of steps of: reducing chlorate ions with methanol in an aqueous reaction medium containing sulphuric acid in a reaction zone,
said reaction medium having a total acid normality of from 5 to less than 7 normal and containing a sufficient concentration of said chlorate ions to produce chlorine dioxide at an efficiency greater than 90%,
said reaction medium having a chlorate ion concentration below 6 molar and no greater than that which results in a periodic random loss of production of chlorine dioxide from said reaction medium,
maintaining said reaction medium at its boiling point while a subatmospheric pressure is applied thereto,
removing chlorine dioxide from said reaction zone in gaseous admixture with steam, and
depositing a by-product sodium acid sulphate in the reaction zone wherein said process being effected in the substantial absence of chloride ions added to said reaction medium.

2. A process as claimed in claim 1, wherein said concentration of chlorate ions is sufficient to form chlorine dioxide at an efficiency of at least 95%.

3. A process as claimed in claim 1 or 2, wherein said reaction medium has a chlorate ion concentration of at least 2.0 molar.

4. A process as claimed in any one of claims 1 to 3, wherein said reaction medium has a chlorate ion concentration of 3.0 to 4.0 molar.

5. A process as claimed in any one of claims 1 to 4, wherein the subatmospheric pressure in said reaction zone is 100 to 300 mm Hg.

6. A process as claimed in claim 5, wherein said subatmospheric pressure is 120 to 200 mm Hg.

7. A process as claimed in any one of claims 1 to 6, wherein said reaction medium is maintained at a reaction temperature of at least 60°C.

8. A process as claimed in claim 7, wherein said reaction temperature is from 65°C to 80°C.

9. A process as claimed in any one of claims 1 to 8, wherein said chlorate ions are provided by sodium chlorate.

10. A continuous process for the production of chlorine dioxide at an efficiency of at least 90%, which comprises:
continuously feeding an aqueous solution of sodium chlorate to a reaction zone containing an aqueous acid chlorine dioxide-generating reaction medium to provide a concentration of sodium chlorate in the reaction medium of at least 2.0 molar and less than that which results in a periodic random loss of production of chlorine dioxide from said reaction medium,
continuously feeding sulphuric acid to said reaction medium to provide a total acid normality of from 5 to below 7 normal in said reaction medium,
continuously feeding methanol to said reaction medium in sufficient quantity to effect formation of chlorine dioxide from said reaction medium,
continuously maintaining said reaction medium at its boiling point at a temperature of at least 60°C while a subatmospheric pressure of 100 to 300 mm Hg is applied to the reaction zone, continuously withdrawing a gaseous admixture comprising chlorine dioxide and steam from said reaction zone, and
continuously depositing a sodium acid sulphate from said reaction medium in said reaction zone after the reaction medium becomes saturated thereby after the initial start-up of the process.

11. A process as claimed in claim 10, wherein said concentration of sodium chlorate in said reaction medium is below 6 molar.

12. A process as claimed in claim 10 or 11, wherein said sodium chlorate concentration is maintained within the range of 2.5 to 4.0 molar.

13. A process as claimed in any one of claims 10 to 12, wherein said reaction medium has a temperature of 65°C to 80°C.

14. A process as claimed in any one of claims 10 to 13, wherein said subatmospheric pressure is maintained in the range of 120 to 200 mm Hg.

15. A process as claimed in any one of claims 10 to 14, wherein an air purge is provided to said reaction zone to provide a partial pressure of chlorine dioxide in said gaseous admixture below 90 mm Hg.

16. A process as claimed in any one of claims 10 to 15, wherein said sodium acid sulphate is removed from the reaction zone in a slurry with spent reaction medium, said sodium acid sulphate is separated from said spent reaction medium, said sodium chlorate and methanol are added to said spent reaction medium, the resulting recycle stream is heated to its boiling point and said sulphuric acid thereafter is fed thereto.

17. A process as claimed in claim 16, wherein said methanol is fed to said spent reaction medium at a location following said reaction zone and prior to said heating of said resulting recycle stream to its boiling point.

18. A process as claimed in any one of claims 10 to 17 which is effected in the substantial absence of chloride ions added to said reaction medium.

19. A process as claimed in any one of claims 10 to 18, wherein methanol is fed to said reaction medium in an amount that does not exceed about 0.2 tons per ton of chlorine dioxide produced.

20. A process as claimed in claim 19, wherein methanol is fed to said reaction medium in an amount of 0.13 to 0.16 tons per ton of chlorine dioxide produced.

## Patentansprüche

1. Verfahren zur Herstellung von Chlordioxid, gekennzeichnet durch die Kombination folgender Schritte:
das Reduzieren von Chlorationen mit Methanol in einem wässrigen Reaktionsmedium, das in einer Reaktionszone Schwefelsäure enthält,
wobei das Reaktionsmedium eine Gesamtsäurenormalität von 5 bis weniger als 7 normal hat und eine ausreichende Konzentration der genannten Chlorationen enthält, um bei einem Wirkungsgrad von mehr als 90% Chlordioxid herzustellen,
wobei das Reaktionsmedium eine Chlorationenkonzentration unter 6 M und nicht grösser hat als die, die zu einem regelmässigen zufälligen Produktionsverlust in bezug auf Chlordioxid von dem genannten Reaktionsmedium führt,
das Erhalten des Reaktionsmediums bei seinem Siedepunkt, während ein Unterdruck darauf aufgebracht wird,
das Entfernen von Chlordioxid aus der genannten Reaktionszone in Gasbeimischung mit Dampf, und
das Ablagern von einem Nebenerzeugnis in Form von Natriumbisulfat in der Reaktionszone, wobei das verfahren in der hauptsächlichen Abwesenheit von Chloridionen durchgeführt wird, welche dem Reaktionsmedium zugesetzt sind.

2. Verfahren nach Anspruch 1, wobei die genannte Konzentration von Chlorationen genügend ist, um bei einem Wirkungsgrad von mindestens 95% Chlordioxid zu bilden.

3. Verfahren nach Anspruch 1 oder 2, wobei das genannte Reaktionsmedium eine Chlorationenkonzentration von wenigstens 2,0 M hat.

4. Verfahren nach einem der Ansprüche 1 bis 3, wobei das genannte Reaktionsmedium eine Chlorationenkonzentration von 3,0 bis 4,0 M hat.

5. Verfahren nach einem der Ansprüche 1 bis 4, wobei der Unterdruck in der Reaktionszone 100 bis 300 mm Hg beträgt.

6. Verfahren nach Anspruch 5, wobei der Unterdruck 120 bis 200 mm Hg beträgt.

7. Verfahren nach einem der Ansprüche 1 bis 6, wobei das Reaktionsmedium bei einer Reaktionstemperatur von mindestens 60°C erhalten wird.

8. Verfahren nach Anspruch 7, wobei die Reaktionstemperatur zwischen 65°C und 80°C liegt.

9. Verfahren nach einem der Ansprüche 1 bis 8, wobei die genannten Chlorationen durch Natriumchlorat erzeugt werden.

10. Kontinuierliches Verfahren zur Herstellung von Chlordioxid bei einem Wirkungsgrad von mindestens 90%, umfassend:
das kontinuierliche Zuführen einer wässrigen Natriumchloratlösung zu einer Reaktionszone, die ein wässriges, saures, Chlordioxid erzeugendes Reaktionsmedium enthält, um eine Konzentration von Natriumchlorat im Reaktionsmedium von mindestens 2,0 M und weniger als die, die zu einem regelmässigen zufälligen Produktionsverlust in bezug auf Chlordioxid von dem genannten Reaktionsmedium führt,
das kontinuierliche Zuführen von Schwefelsäure zum Reaktionsmedium, um eine Gesamtsäurenormalität von 5 bis unter 7 normal im genannten Reaktionsmedium zu erzeugen,
das kontinuierliche Zuführen von Methanol zum Reaktionsmedium in genügender Quantität, um die Bildung von Chlordioxid von dem genannten Reaktionsmedium zu bewirken,
das kontinuierliche Erhalten des genannten Reaktionsmediums an seinem Siedepunkt bei einer Temperatur von mindestens 60°C, während ein Unterdruck von 100 bis 300 mm Hg auf die Reaktionszone aufgebracht wird, das kontinuierliche Ableiten von einem Gasgemisch, umfassend Chlordioxid und Dampf von der genannten Reaktionszone, und
das kontinuierliche Ablagern eines Natriumbisulfats von dem Reaktionsmedium in der genannten Reaktionszone, nachdem das Reaktionsmedium nach dem anfänglichen Ingangsetzen des Verfahrens dadurch gesättigt worden ist.

11. Verfahren nach Anspruch 10, wobei die genannte Konzentration von Natriumchlorat im Reaktionsmedium unter 6 M liegt.

12. Verfahren nach Anspruch 10 oder 11, wobei die genannte Natriumchloratkonzentration im Bereich von 2,5 bis 4,0 M erhalten wird.

13. Verfahren nach einem der Ansprüche 10 bis 12, wobei das genannte Reaktionsmedium eine Temperatur von 65°C bis 80°C aufweist.

14. Verfahren nach einem der Ansprüche 10 bis 13, wobei der Unterdruck im Bereich von 120 bis 200 mm Hg erhalten wird.

15. Verfahren nach einem der Ansprüche 10 bis 14, wobei eine Luftspülung an die Reaktionszone erzeugt wird, um einen Partialdruck von Chlordioxid im genannten Gasgemisch unter 90 mm Hg zu erzeugen.

16. Verfahren nach einem der Ansprüche 10 bis 15, wobei das Natriumbisulfat aus der Reaktionszone in einem Schlamm mit verbrauchtem Reaktionsmedium entfernt wird, wobei das Natriumbisulfat von dem verbrauchten Reaktionsmedium abgeschieden wird, wobei das Natriumchlorat und das Methanol dem verbrauchten Reaktionsmedium zugesetzt werden, der entstehende Kreislaufstrom zu seinem Siedepunkt erhitzt wird und danach die genannte Schwefelsäure diesem zugeführt wird.

17. Verfahren nach Anspruch 16, wobei das Methanol dem verbrauchten Reaktionsmedium an einer Stelle zugeführt wird, die nach der Reaktionszone und vor dem Erhitzen des entstehenden Kreislaufstroms zu seinem Siedepunkt liegt.

18. Verfahren nach einem der Ansprüche 10 bis 17, das in der hauptsächlichen Abwesenheit von Chloridionen durchgeführt wird, welche dem Reaktionsmedium zugesetzt sind.

19. Verfahren nach einem der Ansprüche 10 bis 18, wobei Methanol dem Reaktionsmedium in einer Menge zugeführt wird, die etwa 0,2 Tonnen je Tonne erzeugten Chlordioxids nicht übersteigt.

20. Verfahren nach Anspruch 19, wobei Methanol dem Reaktionsmedium in einer Menge von 0,13 bis 0,16 Tonnen je Tonne hergestellten Chlordioxids zugeführt wird.

## Revendications

1. Procédé de production de dioxyde de chlore, caractérisé par l'association des étapes consistant :
à réduire les ions chlorate par du méthanol dans un milieu réactionnel aqueux contenant de l'acide sulfurique dans une zone réactionnelle,
ledit milieu réactionnel présentant une normalité totale acide comprise entre 5 et moins de 7 N et contenant une concentration suffisante desdits ions chlorate pour produire du dioxyde de chlore à une efficacité supérieure à 90 %,
ledit milieu réactionnel possédant une concentration en ions chlorate inférieure à 6 M et non supérieure à celle qui entraîne une perte périodique aléatoire de la production de dioxyde de chlore à partir dudit milieu réactionnel,
à maintenir ledit milieu réactionnel à son point d'ébullition, tandis qu'on lui applique une pression inférieure à la pression atmosphérique,
à éliminer le dioxyde de chlore de ladite zone réactionnelle dans un mélange gazeux avec de la vapeur et
à déposer un sous-produit, sulfate acide de sodium, dans la zone réactionnelle dans laquelle ledit procédé est réalisé pratiquement sans ion chlorure ajouté dans ledit milieu réactionnel.

2. Procédé selon la revendication 1, dans lequel ladite concentration en ions chlorate est suffisante pour former du dioxyde de chlore à une efficacité d'au moins 95 %.

3. Procédé selon la revendication 1 ou 2, dans lequel ledit milieu réactionnel possède une concentration en ions chlorate égale à au moins 2,0 M.

4. Procédé selon l'une quelconque des revendications 1 à 3, dans lequel ledit milieu réactionnel possède une concentration en ions chlorate comprise entre 3,0 et 4,0 M.

5. Procédé selon l'une quelconque des revendications 1 à 4, dans lequel la pression inférieure à la pression atmosphérique dans ladite zone réactionnelle est comprise entre 100 et 300 mmHg.

6. Procédé selon la revendication 5, dans lequel ladite pression inférieure à la pression atmosphérique est comprise entre 120 et 200 mmHg.

7. Procédé selon l'une quelconque des revendications 1 à 6, dans lequel on maintient ledit milieu réactionnel à une température de réaction d'au moins 60°C.

8. Procédé selon la revendication 7, dans lequel ladite température de réaction est comprise entre 65°C et 80°C.

9. Procédé selon l'une quelconque des revendications 1 à 8, dans lequel lesdits ions chlorate sont fournis par du chlorate de sodium.

10. Procédé continu de production de dioxyde de chlore à une efficacité d'au moins 90 %, lequel comprend les étapes consistant :
à introduire continuellement une solution aqueuse de chlorate de sodium dans une zone réactionnelle contenant un milieu réactionnel aqueux acide produisant du dioxyde de chlore pour fournir une concentration en chlorate de sodium dans le milieu réactionnel égale à au moins 2,0 M et inférieure à celle qui entraîne une perte périodique aléatoire de la production de dioxyde de chlore à partir dudit milieu réactionnel,
à introduire continuellement de l'acide sulfurique dans ledit milieu réactionnel pour fournir une normalité totale acide comprise entre 5 et moins de 7 N dans ledit milieu réactionnel,
à introduire continuellement du méthanol dans ledit milieu réactionnel en une quantité suffisante pour effectuer la formation de dioxyde de chlore à partir dudit milieu réactionnel,
à maintenir continuellement ledit milieu réactionnel à son point d'ébullition à une température égale à au moins 60°C, tandis qu'une pression inférieure à la pression atmosphérique comprise entre 100 et 300 mmHg est appliquée à la zone réactionnelle, en enlevant continuellement un mélange gazeux comprenant du dioxyde de chlore et de la vapeur à partir de ladite zone réactionnelle et
à déposer continuellement du sulfate acide de sodium provenant dudit milieu réactionnel dans ladite zone réactionnelle après saturation du milieu réactionnel de ce fait après le départ initial du procédé.

11. Procédé selon la revendication 10, dans lequel ladite concentration en chlorate de sodium dudit milieu réactionnel est inférieure à 6 M.

12. Procédé selon la revendication 10 ou 11, dans lequel on maintient ladite concentration en chlorate de sodium dans la gamme de 2,5 à 4,0 M.

13. Procédé selon l'une quelconque des revendications 10 à 12, dans lequel ledit milieu réactionnel possède une température comprise entre 65°C et 80°C.

14. Procédé selon l'une quelconque des revendications 10 à 13, dans lequel on maintient ladite pression inférieure à la pression atmosphérique dans la gamme de 120 à 200 mmHg.

15. Procédé selon l'une quelconque des revendications 10 à 14, dans lequel ladite zone réactionnelle est dotée d'un purgeur d'air pour proposer une pression partielle en dioxyde de chlore dans ledit mélange gazeux inférieure à 90 mmHg.

16. Procédé selon l'une quelconque des revendications 10 à 15, dans lequel ledit sulfate acide de sodium est éliminé de la zone réactionnelle dans une suspension épaisse présentant le milieu réactionnel épuisé, dans lequel ledit sulfate acide de sodium est séparé dudit milieu réactionnel épuisé, dans lequel ledit chlorate de sodium et le méthanol sont ajoutés audit milieu réactionnel épuisé, dans lequel le courant de recyclage résultant est chauffé à son point d'ébullition et dans lequel ledit acide sulfurique est ensuite introduit.

17. Procédé selon la revendication 16, dans lequel on introduit ledit méthanol dans ledit milieu réactionnel épuisé à un emplacement suivant ladite zone réactionnelle et avant ledit chauffage dudit courant de recyclage résultant à son point d'ébullition.

18. Procédé selon l'une quelconque des revendications 10 à 17, lequel est effectué pratiquement sans ion chlorure ajouté dans ledit milieu réactionnel.

19. Procédé selon l'une quelconque des revendications 10 à 18, dans lequel on introduit le méthanol dans ledit milieu réactionnel en une quantité qui n'est pas supérieure à environ 0,2 tonne par tonne de dioxyde de chlore produit.

20. Procédé selon la revendication 19, dans lequel on introduit le méthanol dans ledit milieu réactionnel en une quantité comprise entre 0,13 et 0,16 tonne par tonne de dioxyde de chlore produit.
